# EUROPÄISCHE PATENTSCHRIFT

(11) **EP 1 412 661 B1**
(45) Veröffentlichungstag und Bekanntmachung des Hinweises auf die Patenterteilung: **02.03.2005**
(21) Anmeldenummer: 02762356.0
(22) Anmeldetag: 13.07.2002
(51) Int. Cl.: F16H 61/04

(54) **VERFAHREN ZUM ERMITTELN EINES SYNCHRONPUNKTS IN EINEM GETRIEBE**
METHOD FOR DETERMINING A SYNCHRONISATION POINT IN A GEARBOX
PROCEDE POUR DETERMINER UN POINT DE SYNCHRONISATION DANS UNE BOITE DE VITESSES

(30) Priorität: 27.07.2001 DE 10136731
(43) Veröffentlichungstag der Anmeldung: 28.04.2004
(73) Patentinhaber: ZF Sachs AG, 97424 Schweinfurt (DE)
(72) Erfinder: THEIN, Albert, 97437 Hassfurt (DE); HEDMANN, Frank, 97332 Volkach (DE)
(86) Internationale Anmeldenummer: PCT/EP2002/007808
(87) Internationale Veröffentlichungsnummer: WO 2003/012319

(56) Entgegenhaltungen:
- EP-A- 0 310 387
- US-A1- 2002 038 747

## Beschreibung

### [Technisches Gebiet]

Die vorliegende Erfindung betrifft ein Verfahren zur Durchführung eines Synchronisiervorganges in einem automatisierten Schaltgetriebe gemäß dem Oberbegriff von Patentanspruch 1.

### [Stand der Technik]

Fahrzeuge, insbesondere Kraftfahrzeuge, weisen üblicherweise einen Triebstrang auf, in dem neben einer Brennkraftmaschine auch ein Getriebe vorgesehen ist. Zwischen Brennkraftmaschine und Getriebe ist oftmals noch eine Einrichtung zur Übertragung des Drehmoments, beispielsweise eine Kupplung, vorgesehen. Getriebe werden heutzutage mittels einer Steuereinrichtung, einer sogenannten Getriebesteuerung, gesteuert. Während eines Schaltvorgangs im Getriebe wird zunächst die Zugkraft im Triebstrang unterbrochen, beispielsweise indem die Kupplung geöffnet wird. Anschließend wird der eigentliche Gangwechsel vorgenommen. Nach erfolgtem Gangwechsel wird die Kupplung wieder geschlossen. Ebenso findet eine Synchronisierung im Getriebe statt.

Bei dem Getriebe kann es sich beispielsweise um ein automatisiertes Schaltgetriebe handeln. Ein automatisiertes Schaltgetriebe ist generell ein Getriebe, bei dem alle Vorgänge, die der Fahrer bei einem Schaltvorgang ausführt, von elektronisch gesteuerten Aktorsystemen oder dergleichen übernommen werden.

Beim Einlegen eines Gangs muß eine Drehzahlsynchronisation im Getriebe durchgeführt werden. Dies erfolgt bisher mit Hilfe sogenannter Synchronringe. Bei Schaltmuffengetrieben haben die Synchronringe unter anderem die Aufgabe, einen Gleichlauf zwischen Schaltmuffe und Gangrad herzustellen, sowie ein geräuschloses und schnelles Schalten zu ermöglichen. Zum Schalten eines Ganges muß die Schaltmuffe auf die Verzahnung des Gangrades aufgeschoben werden. Das ist nur dann leicht und geräuschlos möglich, wenn Schaltmuffe und Gangrad die gleiche Drehzahl haben. Die Angleichung der Drehzahlen erfolgt unter Zuhilfenahme der Synchronringe, der Angleichvorgang wird als Synchronisation bezeichnet.

Aus der EP 0 310 387 A2 ist ein Verfahren zur Durchführung eines Synchronisiervorganges in einem automatisierten Schaltgetriebe mit den Merkmalen des Oberbegriffs des Anspruchs 1 bekannt, das zum Schalten der Gänge wenigstens einen Aktuator aufweist, von dem als betriebsspezifischer Parameter ein Verlauf der Betätigungskraft pro Wegeinheit erfaßt wird, wobei dieser Verlauf über einen Verlaufsanteil mit Kraftanstieg verfügt. Auf diesen Verlaufsanteil folgt ein weiterer Verlaufsanteil mit Kraftabfall, bevor sich ein dritter Verlaufsanteil mit im Wesentlichen gleichbleibendem Kraftverlauf anschließt. Die beiden erstgenannten Verlaufsanteile sind in einem Synchronisationsbereich des Schaltgetriebes enthalten und dokumentieren demnach den Synchronisierungsvorgang, während der dritte Verlaufsanteil in einem Nach-Synchronisationsbereich liegt und damit die Nach-Synchronisierungsphase, also den Zustand nach Abschluss des Synchronisationsvorganges, angibt. Ermittelt wird bei diesem Verfahren ein Übergangspunkt Z, der exakt zwischen dem Synchronisationsbereich und dem Nach-Synchronisationsbereich liegen sollte, aufgrund von Abweichungen aber auch innerhalb des Synchronisationsbereichs liegen könnte, wodurch sich ein vom idealen Hubweg abweichender Hubweg ergeben würde. Bewusst innerhalb des Synchronisationsbereichs vorgesehene Punkte sind bei der vorgenannten EP 0 310 387 A2 allerdings nicht berücksichtigt.

Bei anderen automatisierten Schaltgetrieben wird ein innerhalb des Synchronisationsbereichs vorgesehener Punkt angefahren, an dem die Synchronisation beginnt, und der nachfolgend Synchronpunkt genannt ist. Dieser Synchronpunkt verändert sich im laufenden Betrieb ständig und muss daher neu ermittelt werden, wobei die Änderung des Synchronpunkts beispielsweise durch Temperatureffekte, Abnutzung der Getriebekomponenten, Unterschiede von Schaltung zu Schaltung (beispielsweise dadurch, ob Schuboder Zugbetrieb vorliegt) und dergleichen zustande kommt.

Bei derartigen automatisierten Schaltgetrieben wird zur Bestimmung des Synchronpunkts ein geschätzter Synchronpunkt angefahren und dieser abhängig von einer Änderung der Drehzahl der Getriebeeingangswelle korrigiert. Diese Lösung weist jedoch eine Reihe von Nachteilen auf. Zur Ermittlung des Synchronpunkts muß nämlich eine Veränderung der Drehzahl der Getriebeeingangswelle detektiert werden. Das bedeutet, daß ein Punkt im Synchronbereich angefahren und der Startpunkt der Synchronisation nur mittels eines geschätzten Werts bestimmt wird. Dies ist nicht nur aufwendig, sondern auch sehr ungenau. Dieses ungenaue Resultat bewirkt zu hohe Kräfte aufgrund der kinetischen Energie am Beginn der Synchronisation und damit auch einen erhöhten Verschleiß des Getriebes sowie ein unkomfortables Schaltverhalten.

Es bestand daher das Bedürfnis, die Ermittlung des Synchronpunkts zu vereinfachen und zu verbessern. In einem anderen Zusammenhang, nämlich der Steuerung einer automatisierten Kupplung, ist in der DE 40 11 850 A1 eine Lösung angegeben worden, bei der ein Regeleingriffspunkt der Kupplung in Abhängigkeit einer innerhalb des Triebstrangs durchgeführten Momentenmessung und/oder Winkelmessung ermittelt wird.

### [Aufgabe der Erfindung]

Ausgehend vom genannten Stand der Technik soll ein Verfahren der eingangs genannten Art derart weitergebildet werden, daß ein Synchronpunkt eines automatisierten Schaltgetriebes auf einfache sowie sehr genaue und zuverlässige Weise ermittelt werden kann.

### [Darstellung der Erfindung]

Diese Aufgabe wird erfindungsgemäß gelöst durch das Verfahren gemäß Patentanspruch 1.

Der vorliegenden Erfindung liegt die Erkenntnis zu Grunde, daß ein Synchronpunkt unter Einbeziehung wenigstens eines betriebsspezifischen Parameters des Aktuators einfach, genau und zuverlässig bestimmt werden kann.

Es wird ein Verfahren zum Ermitteln des Synchronpunkts in einem automatisierten Schaltgetriebe bereitgestellt, wobei das Getriebe zum Schalten der Gänge wenigstens einen Aktuator aufweist. Durch das Verfahren wird es möglich, den Synchronpunkt auf indirekte Weise aus einem betriebsspezifischen Parameter des Aktuators zu ermitteln. Ein Grundgedanke besteht zunächst darin, daß automatisierte Schaltgetriebe über wenigstens einen Aktuator verfügen, mittels dessen die Schaltungen vorgenommen werden. Die Aktuatoren können auf unterschiedlichste Weise ausgebildet sein, so daß die Erfindung nicht auf bestimmte Aktuatortypen beschränkt ist. Einige nicht ausschließliche Beispiele werden im weiteren Verlauf der Beschreibung näher erläutert. Während des Betriebs wird wenigstens ein betriebsspezifischer Parameter des Aktuators erfaßt und als Grundlage für die Ermittlung des Synchronpunkts genommen, wobei es sich vorzugsweise um solche Parameter handelt, die während des Betriebs ohnehin erfaßt werden.
Aus den erfaßten Werten des betriebsspezifischen Parameters des Aktuators wird wenigstens ein Synchronpunkt ermittelt. Dabei erfolgt die Ermittlung des Synchronpunkts vorteilhaft automatisch. Beispielsweise ist es denkbar, daß der Synchronpunkt berechnet oder aufgrund schaltungstechnischer Komponenten erzeugt wird.

Als betriebsspezifischer Parameter ist vorgesehen, die Betätigungskraft pro Wegeinheit im Aktuator zu erfassen. Insbesondere kann hierzu ein Anstieg der Betätigungskraft pro Wegeinheit im Aktuator erfaßt werden, wobei aus dem Kraftanstieg ein Synchronpunkt des Getriebes ermittelt werden kann.

Dies soll anhand eines nicht ausschließlichen Beispiels kurz erläutert werden. Wenn nach einem Gangwechsel eine Synchronisation im Getriebe gestartet wird, geht dies mit einer Erhöhung der Betätigungskraft im Aktuator einher. Dieser Kraftanstieg tritt also zu Beginn der Synchronisation auf. Aus dem Kraftanstieg ergibt sich somit der Hinweis, wann die Synchronisation gestartet wird. Da es sich bei dem Startpunkt der Synchronisation um den Synchronpunkt handelt, läßt sich aus dem Kraftanstieg erkennen, daß beziehungsweise wann dieser Synchronpunkt erreicht ist. Der Kraftanstieg ist somit ein Indikator, aus dem sich auf einfache, genaue und dennoch zuverlässige Weise der Synchronpunkt ermitteln läßt.

Beispielsweise kann die Ermittlung des Synchronpunkts derart erfolgen, daß die Werte des betriebsspezifischen Parameters des Aktuators erfaßt, möglicherweise umgewandelt (etwa umgerechnet) und anschließend mit entsprechenden Referenzwerten verglichen werden. Diese Referenzwerte können beispielsweise in Form geeigneter Kennlinien, Kennfelder, als Dateien oder dergleichen, vorliegen. Die Referenzwerte können beispielsweise zunächst durch entsprechende Versuchsreihen ermittelt werden. Es ist jedoch auch denkbar, daß die einzelnen Referenzwerte mit Hilfe geeigneter Programmittel, somit rechnergestützt, erzeugt werden. Dies kann beispielsweise mit Hilfe geeigneter Simulationsverfahren erfolgen.

In weiterer Ausgestaltung können die Synchronpunkte aus den erfaßten Parameterwerten unter Zuhilfenahme geeigneter Programmittel errechnet werden.

Bei den Programmitteln kann es sich um geeignete Computerprogramme, beziehungsweise Software, handeln. Wenn derartige Programmittel eingesetzt werden, können die Synchronpunkte beispielsweise in der wie vorstehend beschriebenen Art und Weise unter Verwendung von Referenzwerten ermittelt werden. Ebenso ist es jedoch auch denkbar, daß die Synchronpunkte direkt berechnet werden können. In diesem Fall verfügen die Programmittel vorzugsweise über geeignete Algorithmen. Beispiele hierfür werden im weiteren Verlauf der Beschreibung noch näher erläutert.

Vorteilhaft kann eine Steuereinrichtung vorgesehen sein, an die die erfaßten Werte des wenigstens einen betriebsspezifischen Parameters des Aktuators weitergeleitet werden. In der Steuereinrichtung wird dann aus den erfaßten Werten ein Synchronpunkt des Getriebes ermittelt.

Dabei kann die Steuereinrichtung je nach Ausgestaltung des Getriebes entweder Bestandteil des Getriebes selbst sein, oder aber als separate Steuereinrichtung vorliegen. Im letztgenannten Fall kann es sich bei der Steuereinrichtung dann um eine zentrale Steuereinrichtung handeln, die beispielsweise auch noch andere Komponenten steuert.

Um die Werte des betriebsspezifischen Parameters des Aktuators in geeigneter Weise erfassen zu können, ist die Steuereinrichtung vorzugsweise zumindest zeitweilig mit dem Aktuator, insbesondere mit einer Aktuatorsteuerung, verbunden. Die Verbindung kann beispielsweise elektrisch und/oder optisch mittels einer geeigneten Verkabelung realisiert werden. Ebenso ist eine kabellose Verbindung denkbar, etwa mittels Funk, Infrarot und dergleichen. Die Erfindung ist nicht auf bestimmte Verbindungstypen beschränkt. Wichtig ist lediglich, daß zwischen Steuereinrichtung und Aktuator zumindest zeitweilig eine irgendwie geartete Verbindung zustande kommt, über die eine Kommunikation beziehungsweise ein Signalaustausch stattfindet oder stattfinden kann.

Vorzugsweise können die Werte des wenigstens eine betriebsspezifischen Parameters von in der Steuereinrichtung vorgesehenen Programmitteln verarbeitet werden, wobei aufgrund der erfaßten Parameterwerte mittels der Programmittel ein Synchronpunkt des Getriebes ermittelt wird. Bei den Programmitteln kann es sich um geeignete Computerprogramme beziehungsweise Software handeln.

Vorzugsweise kann wenigstens ein Speichermittel vorgesehen sein, wobei die erfaßten Parameterwerte und/oder die ermittelten Synchronpunkte zumindest zeitweilig im Speichermittel abgespeichert werden. Die Erfindung ist nicht auf bestimmte Arten von Speichermitteln beschränkt.

Wenn es sich bei dem Speichermittel im Vergleich zur Steuereinrichtung um ein externes Speichermittel handelt, kann dieses beispielsweise als (Magnet-) Band, als Diskette, als CD-ROM oder dergleichen ausgebildet sein. Wenn das Speichermittel Bestandteil der Steuereinrichtung ist, kann es sich hierbei beispielsweise auch um eine Festplatte oder dergleichen handeln.

Durch die zumindest zeitweilige Speicherung von Parameterwerten und/oder Synchronpunkten lassen sich historische Entwicklungen besonders einfach nachweisen. Solche Nachweise können beispielsweise dann erforderlich sein, wenn eventuelle Fehler aufgedeckt oder sonstige Aussagen zu historischen Entwicklungen gemacht werden sollen. Dies kann beispielsweise im Rahmen von Wartungs-, Reparaturarbeiten oder dergleichen von Nutzen sein. Bei Wartungs- und Reparaturarbeiten können die im Speichermittel abgelegten Informationen einfach und bequem ausgelesen und ausgewertet werden. Damit bilden sie eine Grundlage für geeignete Maßnahmen.

In weiterer Ausgestaltung kann wenigstens eine Anzeigeeinrichtung vorgesehen sein, wobei die erfaßten Parameterwerte und/oder die ermittelten Synchronpunkte zumindest zeitweilig in der Anzeigeeinrichtung angezeigt werden. Hierüber lassen sich die erfaßten Parameterwerte und/oder die Synchronpunkte darstellen und visualisieren. Die Anzeigeeinrichtung kann beispielsweise als Lampe, Display, etwa als Display in einem Bordcomputer, oder dergleichen, ausgebildet sein.

Das Speichermittel und/oder die Anzeigeeinrichtung kann/können je nach Ausführungsform entweder Bestandteil der Steuereinrichtung selbst sein, oder aber als separate Elemente vorliegen. Im letztgenannten Fall kann es sich dann um entsprechend zentrale Elemente handeln, die beispielsweise auch noch von anderen Komponenten mit benutzt werden können.

Die Erfindung ist nicht auf bestimmte Aktuatortypen beschränkt. So kann der Aktuator beispielsweise als hydraulischer, pneumatischer, elektromechanischer Aktuator und dergleichen ausgebildet sein. Vorteilhaft ist der Aktuator jedoch als elektromechanischer Aktuator ausgebildet, wobei in diesem Fall zur Erfassung der Betätigungskraft pro Wegeinheit des Aktuators beispielsweise der im Aktuator fließende Strom gemessen werden kann.

Aus den gemessenen Stromwerten kann dann die jeweils vorherrschende Betätigungskraft ermittelt werden, insbesondere dann, wenn die Kraft proportional zum fließenden Strom ist. Die Ermittlung der Kraftwerte kann in der weiter oben beschriebenen Weise erfolgen, beispielsweise unter Verwendung von Referenzwerten, Kennlinien, Kennfeldern, der Berechnung mittels geeigneter Programmittel und dergleichen. Wenn ein Anstieg des Stroms gemessen wird, bedeutet dies, daß auch ein Anstieg der Betätigungskraft, die den Beginn der Synchronisation darstellt, zu verzeichnen ist.

Vorzugsweise kann zusätzlich zu dem im Aktuator fließenden Strom auch die Bewegungsgeschwindigkeit des Aktuators gemessen werden. Vorteilhaft wird die Bewegungsgeschwindigkeit derart eingestellt, daß diese konstant ist.

In einer solchen Ausgestaltung bietet sich beispielsweise der gemessene Strom unter Berücksichtigung der Bewegungsgeschwindigkeit des Aktuators als Größe an, aus der der Synchronpunkt des Getriebes ermittelt werden kann. Um die Kraft im Getriebe zu ermitteln, wird der gemessene Strom beispielsweise anhand eines geeigneten Umrechnungsverfahrens, in das wirkende Drehmoment im elektrischen Antrieb des Aktuators (sofern es sich hierbei um einen elektromechanischen Aktuator handelt) umgerechnet. Beispielsweise kann dies anhand eine Kennfelds "Strom über Bewegungsgeschwindigkeit" erfolgen, aus dem als Resultat die Betätigungskraft ableitbar ist. Durch geschickte Wahl der Ansteuerung (konstante Bewegungsgeschwindigkeit) läßt sich die Änderung der Betätigungskraft auf eine Änderung des Stroms zurückführen. Unter dieser Annahme kann dann mit einer Änderung des Stromgradienten der Anfang der Synchronisation (Synchronpunkt) bestimmt werden.

Durch das erfindungsgemäße Verfahren wird neben einer Reduzierung des Verschleißes in Getriebe und Aktuator auch ein Komfortgewinn beim Schalten erzielt. Weiterhin läßt sich eine Funktionskontrolle der Synchronisation vor dem Hintergrund einer möglichen Schwergängigkeit durchführen sowie die Funktionssicherheit erhöhen. Eine Plausibilisierung des ermittelten Synchronpunkts kann je nach Bedarf durch einen zusätzlichen Positionssensor unterstützt werden.

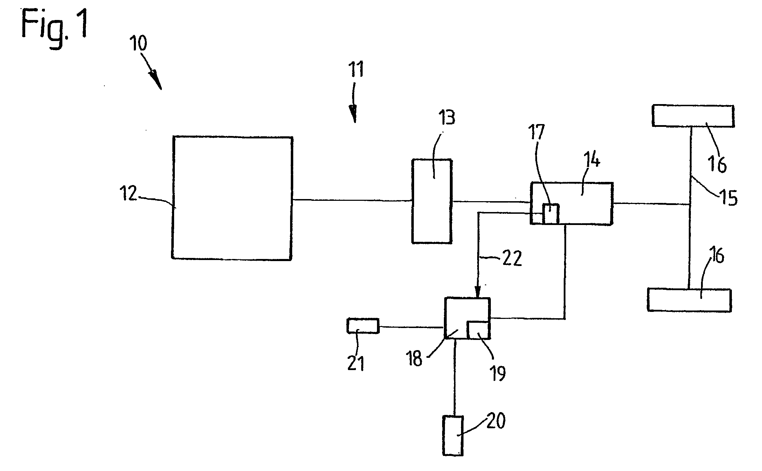

Die Erfindung wird nun anhand eines Ausführungsbeispiels unter Bezugnahme auf die beiliegende Zeichnung näher erläutert. Es zeigt die einzige Figur 1 in schematischer Ansicht einen Triebstrang für Fahrzeug, in dem das erfindungsgemäße Verfahren durchgeführt werden kann.

In der Figur 1 ist ein Fahrzeug 10 mit einem Triebstrang 11 dargestellt. Der Triebstrang 11 weist eine Brennkraftmaschine - hier einen Verbrennungsmotor-12 auf, die abtriebsseitig mit einer Einrichtung 13 zur Übertragung des Drehmoments, hier einer Kupplung, verbunden ist. Die Kupplung 13 wiederum ist abtriebsseitig mit einem automatisierten Schaltgetriebe 14 verbunden. Das im Triebstrang 11 erzeugte Drehmoment wird auf eine Achse 15 und von dort auf die Fahrzeugräder 16 übertragen.

Das automatisierte Schaltgetriebe 14 verfügt über wenigstens einen Aktuator 17, hier einen elektomechanischen Aktuator, über den die Gänge im Getriebe 14 geschaltet werden.

Um das Schaltgetriebe 14 steuern zu können, ist eine Steuereinrichtung 18 vorgesehen. Die Steuereinrichtung 18 verfügt über eine Rechnereinheit 19 und ist zumindest zeitweilig mit einem Speichermittel 20 und einer Anzeigeeinrichtung 21, beispielsweise einem Display, verbunden.

Die Steuereinrichtung 18 ist über entsprechende Verbindungen und Schnittstellen sowohl mit dem Getriebe 14, als auch optional mit weiteren Komponenten des Fahrzeugs 10 verbunden. Weiterhin besteht zumindest zeitweilig eine Verbindung 22 zwischen Aktuator 17 und Steuereinrichtung 18, bei der es sich beispielsweise um eine Signalleitung handeln kann.

Nachfolgend wird nun das Verfahren zum Ermitteln eines Synchronpunkts im Getriebe 14 beschrieben.

Wenn das Getriebe 14 geschaltet wurde, muß in diesem eine Synchronisation erfolgen. Dazu muß der Synchronpunkt, an dem die Synchronisation beginnt, gezielt angefahren werden. Um diesen Synchronpunkt auf einfache Weise genau und zuverlässig bestimmen zu können, wird dieser nunmehr indirekt aus wenigstens einem betriebsspezifischen Parameter des Aktuators 17 ermittelt. Dazu wird beispielsweise die Betätigungskraft pro Wegeinheit im Aktuator 17 erfaßt. Dies kann beispielsweise dadurch geschehen, daß der im Aktuator 17 fließende Strom gemessen wird. Die erfaßten Parameterwerte werden über die Verbindung 22 an die Steuereinrichtung 18 weitergeleitet. Hier werden in der Rechnereinheit 19 aus gemessenen Stromwerten entsprechende Kraftwerte errechnet. Gleichzeitig wird über die Steuereinrichtung 18 eine konstante Bewegungsgeschwindigkeit im Aktuator 17 eingestellt.

Wenn nun die Synchronisation beginnt, was dem Erreichen des Synchronpunkts entspricht, steigt der Kraftbedarf im Aktuator plötzlich an. Dies geht mit einem gleichzeitig steigenden Stromverbrauch einher. Auf diese Weise kann mit einer Änderung des Stromgradienten der Anfang der Synchronisation, nämlich der Synchronpunkt, erkannt werden. Dies geschieht in der Steuereinrichtung 18. Die erfaßten und ermittelten Werte können ebenfalls im Speichermittel 20 abgelegt und in der Anzeigeeinrichtung 21 angezeigt werden.

### [Bezugszeichenliste]

- 10 =: Fahrzeug
- 11 =: Triebstrang
- 12 =: Brennkraftmaschine (beispielsweise Verbrennungsmotor)
- 13 =: Einrichtung zum Übertragen des Drehmoments (beispielsweise Kupplung)
- 14 =: Getriebe (beispielsweise automatisiertes Schaltgetriebe)
- 15 =: Achse
- 16 =: Rad
- 17 =: Aktuator (beispielsweise elektromechanischer Aktuator)
- 18 =: Steuereinrichtung
- 19 =: Rechnereinheit
- 20 =: Speichermittel
- 21 =: Anzeigeeinrichtung
- 22 =: Verbindung (beispielsweise Signalleitung)

## Patentansprüche

1. Verfahren zur Durchführung eines Synchronisiervorganges in einem automatisierten Schaltgetriebe (14), das zum Schalten der Gänge wenigstens einen Aktuator (17) aufweist, von dem als betriebsspezifischer Parameter ein Verlauf einer Betätigungskraft pro Wegeinheit erfaßt wird, wobei dieser Verlauf über einen Verlaufsanteil mit Kraftanstieg verfügt,
**dadurch gekennzeichnet,**
**dass** aus dem Kraftanstieg ein Synchronpunkt des Getriebes (14) ermittelt wird.

2. Verfahren nach Anspruch 1 mit einer Steuereinrichtung (18), an welche erfaßte Werte des betriebsspezifischen Parameters des Aktuators (17) an die Steuereinrichtung (18) weitergeleitet werden,
**dadurch gekennzeichnet,**
**daß** in der Steuereinrichtung (18) aus den erfaßten Werten der Synchronpunkt des Getriebes (14) ermittelt wird.

3. Verfahren nach Anspruch 2, wonach die Werte des betriebsspezifischen Parameters von in der Steuereinrichtung (18) vorgesehenen Programmitteln verarbeitet werden,
**dadurch gekennzeichnet,**
**daß** aufgrund der erfaßten Parameterwerte mittels der Programmittel der Synchronpunkt des Getriebes (14) ermittelt wird.

4. Verfahren nach einem der Ansprüche 1 bis 3,
**dadurch gekennzeichnet,**
**daß** wenigstens eine Anzeigeeinrichtung (21) vorgesehen ist und daß die erfaßten Parameterwerte und/oder die ermittelten Synchronpunkte zumindest zeitweilig in der Anzeigeeinrichtung (21) angezeigt werden.

5. Verfahren nach einem der Ansprüche 1 bis 4 mit einem Aktuator (17), der als elektromechanischer Aktuator ausgebildet ist, und bei dem zur Erfassung der Betätigungskraft pro Wegeinheit der im Aktuator (17) fließende Strom gemessen wird,
**dadurch gekennzeichnet,**
**daß** zusätzlich zu dem im Aktuator (17) fließenden Strom auch die Bewegungsgeschwindigkeit des Aktuators (17) gemessen wird.

6. Verfahren nach Anspruch 5,
**dadurch gekennzeichnet,**
**daß** eine konstante Bewegungsgeschwindigkeit für den Aktuator (17) eingestellt wird.

## Claims

1. Method for carrying out a synchronizing procedure in an automated change speed gearbox (14) which has at least one actuator (17) for shifting the gears, from which actuator (17) a progression of an actuating force is detected per distance unit as an operation-specific parameter, the said progression having a progression part with an increase in force, **characterized in that** a synchronization point of the gearbox (14) is determined from the increase in force.

2. Method according to Claim 1, having a control device (18) to which detected values of the operation-specific parameter of the actuator (17) are forwarded, **characterized in that** the synchronization point of the gearbox (14) is determined in the control device (18) from the detected values.

3. Method according to Claim 2, according to which the values of the operation-specific parameter are processed by program means which are provided in the control device (18), **characterized in that** the synchronization point of the gearbox (14) is determined by means of the program means on the basis of the detected parameter values.

4. Method according to one of Claims 1 to 3, **characterized in that** at least one display device (21) is provided, and **in that** the detected parameter values and/or the determined synchronization points are displayed at least temporarily in the display device (21).

5. Method according to one of Claims 1 to 4, having an actuator (17) which is configured as an electromechanical actuator, and in which method the current which flows in the actuator (17) is measured in order to detect the actuating force per distance unit, **characterized in that**, in addition to the current which flows in the actuator (17), the movement speed of the actuator (17) is also measured.

6. Method according to Claim 5, **characterized in that** a constant movement speed is set for the actuator (17).

## Revendications

1. Procédé d'exécution d'une opération de synchronisation dans une boîte de vitesse automatique (14) qui présente au moins un dispositif d'actionnement (17) pour le changement de rapport qui détecte l'évolution de la force d'actionnement par unité de parcours comme paramètre spécifique de fonctionnement, une cette évolution présentant une partie dans laquelle la force augmente, **caractérisé en ce qu'**un point de synchronisation de la boîte de vitesse (14) est déterminé sur base de l'augmentation de la force.

2. Procédé selon la revendication 1, qui présente un dispositif de commande (18), les valeurs saisies du paramètre spécifique de fonctionnement du dispositif de commande (17) étant transmises au dispositif de commande (18), **caractérisé en ce que** le point de synchronisation de la boîte de vitesse (14) est déterminé dans le dispositif de commande (18) à partir des valeurs saisies.

3. Procédé selon la revendication 2, dans lequel les valeurs du paramètre spécifique de fonctionnement sont traitées par des programmes prévus dans le dispositif de commande (18), **caractérisé en ce que** le point de synchronisation de la boîte de vitesse (14) est déterminé au moyen des programmes sur base des valeurs saisies de paramètre.

4. Procédé selon l'une des revendications 1 à 3, **caractérisé en ce qu'**est prévu au moins un dispositif d'affichage (21) et **en ce que** les valeurs de paramètre saisies et/ou les points de synchronisation déterminés sont affichés au moins temporairement sur le dispositif d'affichage (21).

5. Procédé selon l'une des revendications 1 à 4, qui présente un dispositif d'actionnement (17) qui est configuré comme dispositif électromécanique d'actionnement et dans lequel le courant qui passe dans le dispositif d'actionnement (17) est mesuré pour saisir la force de commande par unité de parcours, **caractérisé en ce qu'**outre le courant qui passe dans le dispositif d'actionnement (17), on mesure également la vitesse de déplacement du dispositif d'actionnement (17).

6. Procédé selon la revendication 5, **caractérisé en ce que** le dispositif d'actionnement (17) est réglé à une vitesse de déplacement constante.
